# EUROPÄISCHE PATENTSCHRIFT

(11) **EP 3 575 189 B1**
(45) Veröffentlichungstag und Bekanntmachung des Hinweises auf die Patenterteilung: **13.04.2022**
(21) Anmeldenummer: 19176432.3
(22) Anmeldetag: 24.05.2019
(51) Int. Cl.: B62D 25/04, B62D 29/00

(54) **B-SÄULE FÜR EINE KRAFTFAHRZEUGKAROSSERIE SOWIE KRAFTFAHRZEUGKAROSSERIE MIT EINER SOLCHEN B-SÄULE**
B-PILLAR FOR THE BODY OF A MOTOR VEHICLE AND VEHICLE BODY COMPRISING SUCH A B-PILLAR
PIED MILIEU POUR UNE CARROSSERIE DE VÉHICULE AINSI QUE CARROSSERIE DE VÉHICULE POURVUE D'UN TEL PIED MILIEU

(30) Priorität: 01.06.2018 DE 102018113141
(43) Veröffentlichungstag der Anmeldung: 04.12.2019
(73) Patentinhaber: Muhr und Bender KG, 57439 Attendorn (DE)
(72) Erfinder: STEFFENS, Hubertus, 57489 Drolshagen (DE); SPIELVOGEL, Bernhard, 5271 Moosbach (AT)
(74) Vertreter: Neumann Müller Oberwalleney Patentanwälte PartG mbB

(56) Entgegenhaltungen:
- DE-A1-102015 203 644
- DE-B3-102013 106 070
- DE-B3-102015 115 439
- DE-B3-102016 116 787

## Beschreibung

Die vorliegende Erfindung betrifft eine B-Säule für eine Kraftfahrzeugkarosserie, die sich entlang einer Längsachse erstreckt und einen oberen Metallabschnitt zur Anbindung der B-Säule an einen Dachbereich der Karosserie und einen unteren Metallabschnitt zur Anbindung der B-Säule an einen Schwellerbereich der Karosserie sowie eine Faserverbundkomponente umfasst. Des Weiteren betrifft die vorliegende Erfindung eine Kraftfahrzeugkarosserie mit einer solchen B-Säule.

Aus der EP 3 138 685 A1 ist eine B-Säule bekannt, die einen metallischen Grundkörper aufweist, der mit einem Faserverbundmaterial in Bereichen lokaler Belastungsmaxima verstärkt ist. In den lokal verstärkten Bereichen der B-Säule trägt die auf die B-Säule einwirkende Last somit ein mehrschichtiger Verbund aus Metall und Faserverbundmaterial.

Die DE 10 2006 027 546 A1 zeigt eine mehrschalige B-Säule aus Blechformteilen, die im mittleren Bereich der B-Säule zum Schutz der Insassen beim Seitenaufprall mit einem Aufprallschutz-Verstärkungsteil lokal verstärkt ist. Das Verstärkungsteil besteht aus einem Faserverbundmaterial.

Aus der DE 10 2012 023 653 A1 ist eine B-Säule mit einem inneren Schließteil aus einem flachen Blechzuschnitt bekannt, auf das von außen ein Leichtbauteil aus faserverstärktem Kunststoff aufgesetzt ist. Das Faserverbundteil erstreckt sich über die gesamte Länge des inneren Schließteils.

Aus der DE 10 2016 116 787 B3 ist eine B-Säule bekannt, die zwei tragende Strukturelemente aufweist, nämlich ein Blechformteil und ein Faserverbundteil. Das Faserverbundteil ist schalenförmig ausgebildet und von außen auf eine Außenseite des schalenförmig ausgebildeten Blechformteils aufgesetzt. Die Außenseite ist im eingebauten Zustand der B-Säule von der Fahrgastzelle abgewandt. Somit ist das Faserverbundteil auf der Druckseite der B-Säule angeordnet, sodass das Faserverbundteil bei einem Seitenaufprall gegen das dahinterliegende Blechformteil gedrückt wird. Zur Verstärkung der Verbindung zwischen dem Faserverbundteil und dem Blechformteil können am oberen Ende und seitlich entlang der Länge des Faserverbundteils Verbindungseinleger im Faserverbundteil eingebettet sein, wobei die vorstehenden freien Enden der Verbindungseinleger mit dem Blechformteil verschweißt sein können.

Der vorliegenden Erfindung liegt die Aufgabe zugrunde, eine gewichtsreduziertere B-Säule bereitzustellen, die anspruchsvolle Crash-Lastfälle erfüllt. Die Aufgabe besteht ferner darin, eine gewichtsreduziertere Kraftfahrzeugkarosserie bereitzustellen, die anspruchsvolle Crash-Lastfälle erfüllt.

Eine Lösung besteht in einer B-Säule der eingangs genannten Art darin, dass der obere Metallabschnitt einen oberen Krafteinleitungsbereich und der untere Metallabschnitt einen vom oberen Krafteinleitungsbereich axial beabstandeten unteren Krafteinleitungsbereich aufweist, wobei der obere Krafteinleitungsbereich und der untere Krafteinleitungsbereich in der Faserverbundkomponente eingebettet sind.

Die B-Säule ist eine tragende Fahrzeugsäule einer Kraftfahrzeugkarosserie. Wenn auf einen "eingebauten Zustand" Bezug genommen wird, ist derjenige Zustand gemeint, in dem die funktionsfertige B-Säule in der Karosserie zwischen dem Dachbereich und dem Schwellerbereich eingebaut ist. Begriffe wie "unten", "oben" oder "Mitte" stellen räumliche Angaben in Bezug auf die B-Säule im eingebauten Zustand der Karosserie dar. Die Länge der B-Säule entspricht der Länge des Verlaufes einer Mittellinie der B-Säule, die sich ausgehend von einer Unterkante der B-Säule bis zu einer Oberkante der B-Säule erstreckt. Üblicherweise ist die Mittellinie eine geradlinige Längsachse der B-Säule, wobei die Mittellinie bei geschwungenen Verlauf der B-Säule auch gebogen sein kann.

Durch die Einbettung des oberen Metallabschnittes und des unteren Metallabschnittes in die Faserverbundkomponente ist die B-Säule eine hybride Metall-Faserverbund-Säule in integraler Bauweise. Von Vorteil ist, dass die hybride B-Säule mittels herkömmlicher Fügetechniken, zum Beispiel durch Einsatz konventioneller Schweißverfahren, in die metallische Kraftfahrzeugkarosserie integriert werden kann. Weiterhin ist von Vorteil, dass Bereiche der B-Säule, die nicht der Anbindung an Bauteile der Karosserie dienen, durch die im Vergleich zu metallischen Werkstoffen leichtere Faserverbundkomponente substituiert werden können. Somit ist vorgesehen, dass die Faserverbundkomponente Bereiche, in denen der metallische Werkstoff ausgespart ist, insbesondere vollständig ausfüllt. Daraus ergibt sich, dass die Faserverbundkomponente nicht in Form von lokalen Patches zur Verstärkung eines metallischen Grundkörpers der B-Säule eingesetzt wird. Vielmehr ist eine Materialdoppelung, die sich durch eine Überlagerung von Metallabschnitten mit der Faserverbundkomponente ergibt, nur insoweit notwendig, um im jeweiligen Krafteinleitungsbereich eine unlösbare Verbindung zwischen den beiden Verbindungspartnern, Faserverbundkomponente und Metallabschnitt, sicherzustellen.

Dadurch, dass der obere Krafteinleitungsbereich des oberen Metallabschnitts und der untere Krafteinleitungsbereich des unteren Metallabschnitts in der Faserverbundkomponente eingebettet sind, dient die Kunststoffmatrix der Faserverbundkomponente als Klebemittel, das den oberen Metallabschnitt und den unteren Metallabschnitt mit der Faserverbundkomponente unlösbar verbindet. Eingebettet bedeutet, dass der jeweilige Metallabschnitt im Schnitt durch die B-Säule betrachtet c-förmig von der Faserverbundkomponente umgeben ist. Somit liegt die Faserverbundkomponente zu drei Seiten an dem jeweiligen Metallabschnitt an.

Die Faserverbundkomponente weist die Kunststoffmatrix und die in der Matrix gebundenen Fasern auf. In an sich bekannter Weise übernehmen die Fasern innerhalb der Faserverbundkomponente die Kraftübertragung und die Matrix füllt Zwischenräume aus und leitet die äußeren Kräfte in die Fasern ein. Die Kunststoffmatrix kann eine thermoplastische Matrix oder eine duroplastische Matrix sein. Die Fasern können beispielsweise Kohlenstoff- und/oder Glas- und/oder Aramidfaser umfassen.

Die Verbindung der Metallabschnitte mit der Faserverbundkomponente erfolgt vor dem Aushärten bzw. Erstarren der Matrix und somit noch während der Herstellung der Faserverbundkomponente. Hierzu kann der Faserverbundwerkstoff per Hand, teilmaschinell oder maschinell mit den Metallabschnitten verbunden werden, beispielsweise durch ein Laminier-, Faserspritz-, Press- oder Injektionsverfahren oder durch ein anderes zur Verbindung von Metall mit Faserverbundwerkstoff geeignetes Verfahren. Sobald die Matrix ausgehärtet bzw. erstarrt ist, sind die Faserverbundkomponente und die Metallabschnitte unlösbar miteinander verbunden und bilden ein integrales Hybridbauteil in Form der funktionsfertigen B-Säule. "Unlösbar" bedeutet in diesem Zusammenhang, dass die Faserverbundkomponente unbeweglich gegenüber den Metallabschnitten an diesen anhaftet. Wenn es zu einer Ablösung der Faserverbundkomponente von den Metallabschnitten kommt, beispielsweise bedingt durch einen unfallbedingten Seitenaufprall, ist die B-Säule zerstört.

Der obere und/oder der untere Metallabschnitte sind/ist vorzugsweise aus Stahlblech hergestellt. Das Stahlblech kann ein insbesondere höherfester Kaltformstahl, beispielsweise ein Dualphasen-Stahl, sein. Vorzugsweise sind sowohl der obere Metallabschnitt als auch der untere Metallabschnitt aus einem Kaltformstahl hergestellt. Der obere Metallabschnitt und/oder der untere Metallabschnitt können aber auch aus Magnesium oder Aluminium sein.

Des Weiteren kann vorgesehen sein, dass der obere Metallabschnitt einen oberen Abschlussrand aufweist, und/oder dass der untere Metallabschnitt einen unteren Abschlussrand aufweist, wobei sich die Faserverbundkomponente mit einem oberen Endbereich über den oberen Abschlussrand in den oberen Krafteinleitungsbereich und/oder mit einem unteren Endbereich über den unteren Abschlussrand in den unteren Krafteinleitungsbereich hinein erstreckt. Entlang des jeweiligen Abschlussrandes endet der jeweilige Metallabschnitt, sodass sich jenseits des jeweiligen Abschlussrandes ein Bereich der B-Säule anschließt, in dem der jeweilige Metallabschnitt quasi ausgespart ist. Die sich dadurch ergebende Aussparung kann zumindest teilweise durch die Faserverbundkomponente ausgefüllt sein, um die Last der B-Säule in diesem Bereich zu tragen. Dadurch, dass die Faserverbundkomponente sich über den jeweiligen Abschlussrand hinaus in den jeweiligen Krafteinleitungsbereich hinein erstreckt, umgreift die Faserverbundkomponente den jeweiligen Metallabschnitt, im Längsschnitt durch die B-Säule betrachtet, C-förmig. Dies ermöglicht eine besonders stabile Integration der Faserverbundkomponente in den Kraftfluss der B-Säule.

Vorzugsweise ist die Faserverbundkomponente in sich zusammenhängend ausgebildet. Dadurch nimmt die Faserverbundkomponente eine strukturtragende Funktion innerhalb der B-Säule wahr. Auf diese Weise kann die auf die eingebaute B-Säule einwirkende Last entlang eines Längsabschnitt der B-Säule, der zwischen dem oberen Metallabschnitt und dem unteren Metallabschnitt definiert ist, zu mehr als 50 % durch die im Kraftfluss der B-Säule integrierte Faserverbundkomponente übernommen bzw. getragen werden.

Um eine besonders leichte B-Säule bereitzustellen, bei der das Verhältnis zwischen Faserverbundkomponente zu Metallabschnitten möglichst groß ist, kann die Faserverbundkomponente sich über mindestens das 0,25-fache einer Gesamtlänge der B-Säule erstrecken, insbesondere zwischen 50 % und 90 % der Gesamtlänge der B-Säule sein. Weiterhin kann ein Abstand zwischen dem oberen Abschlussrand und dem unteren Abschlussrand mindestens 25 % der Gesamtlänge der B-Säule und/oder maximal 95 % der Gesamtlänge der B-Säule betragen. Weiterhin von Vorteil ist, dass die Faserverbundkomponente somit in einem mittleren Bereich der B-Säule angeordnet ist, der zum Schutz der Insassen üblicherweise hochfest ausgelegt ist. Denn die Faserverbundkomponente weist im Vergleich zum metallischen Werkstoff der Metallabschnitte eine niedrigere Bruchdehnung auf, ist jedoch bei Lasteintrag, beispielsweise bei einem Seitenaufprall, bis zu einem gewissen Grad elastisch und kann entsprechend nachgeben. Solange die Bruchdehnung der Faserverbundkomponente nicht überschritten wird, kehrt diese nach Lasteintrag wieder in deren ursprüngliche Form zurück. Diese vorteilhafte Bewegung der Faserverbundkomponente kann auch als Atmen bezeichnet werden.

In zweckmäßigerweise Weise kann ein unteres Ende, insbesondere eine untere Endkante der Faserverbundkomponente von einem unteren Ende, insbesondere einer unteren Endkante der B-Säule mit einem Abstand von mindestens 10 cm, insbesondere mit einem Abstand zwischen 10 cm und 60 cm, beabstandet sein. Auf diese Weise kann die B-Säule ausschließlich über den unteren Metallabschnitt mit dem Schwellerbereich der Karosserie gefügt werden, um Standardfügeverfahren zur Anbindung der B-Säule an den metallischen Schwellerbereich einsetzen zu können. Durch die Beabstandung der Faserverbundkomponente vom Schwellerbereich kann durch den unteren Metallabschnitt, insbesondere in einem Türeinstiegsbereich, ein Deformationsbereich bereitgestellt werden, der sich im Crashfall plastisch verformen kann. Alternativ oder zusätzlich zur Beabstandung der Faserverbundkomponente von dem unteren Ende der B-Säule kann ein oberes Ende, insbesondere eine obere Endkante der Faserverbundkomponente von einem oberen Ende, insbesondere einer oberen Endkante der B-Säule mit einem Abstand von mindestens 5 cm, insbesondere mit einem Abstand zwischen 5 cm und 40 cm, beabstandet sein. Hier ist ebenso von Vorteil, dass die B-Säule nur über den oberen Metallabschnitt mit dem insbesondere metallischen Dachbereich der Karosserie gefügt werden muss. Im Ergebnis wird dadurch die Einbindung der B-Säule in die Karosserie vereinfacht, weil die Faserverbundkomponente nur mit den Metallabschnitten der B-Säule verbunden ist und beim Einbau der B-Säule nur die Metallabschnitte, vorzugsweise mittels konventioneller Fügetechniken, mit Karosserieteilen verbunden werden.

Gemäß einer ersten Ausgestaltung kann vorgesehen sein, dass der obere Metallabschnitt und der untere Metallabschnitt separate Blechformteile sind, die ausschließlich über die Faserverbundkomponente miteinander verbunden sind. Dadurch wird der obere Metallabschnitt nur zur Anbindung der B-Säule an den Dachbereich der Karosserie und der untere Metallabschnitt zur Anbindung der B-Säule an den Schwellerbereich der Karosserie und gegebenenfalls zur Bereitstellung einer Deformationszone im Türeinstiegsbereich der Karosserie verwendet. Somit sind die beiden Blechformteile räumlich voneinander beabstandet, sodass die Tragfunktion der B-Säule in diesem Bereich der B-Säule ausschließlich von der Faserverbundkomponente übernommen wird. Der obere Metallabschnitt und/oder der untere Metallabschnitt können jeweils zumindest abschnittsweise wenigstens einen seitlichen Fügeflansch zur Verbindung von an die B-Säule angrenzender Bauteile mit der B-Säule aufweisen, wobei der wenigstens eine seitliche Fügeflansch die Faserverbundkomponente seitlich überragt. Somit können auch weitere Bauteile, wie beispielsweise eine Türdichtung und/oder eine Fahrzeugaußenhaut und/oder eine Glasfläche, ausschließlich mit dem jeweiligen Metallabschnitt verbunden werden, sodass auch hier auf konventionelle Fügetechniken zurückgegriffen werden kann.

Um die Verbindung zwischen dem jeweiligen Metallabschnitt und der Faserverbundkomponente weiter zu stärken, kann der Krafteinleitungsbereich des oberen Metallabschnitts und/oder der Krafteinleitungsbereich des unteren Metallabschnitts, in einem Längsschnitt durch die B-Säule betrachtet, U-förmig ausgebildet sein. Dadurch wird die unlösbare Verbindung zwischen der Faserverbundkomponente und dem jeweiligen Metallabschnitt zusätzlich verstärkt.

Grundsätzlich denkbar und möglich ist aber auch, dass entweder der obere oder der untere Metallabschnitt zusätzlich oder alternativ zu den Krafteinleitungsbereichen Fügebereiche aufweist, die im Unterschied zu den in der Matrix eingebundenen Krafteinleitungsbereichen lediglich einseitig auf der Faserverbundkomponente aufliegen und mittels bekannter Fügeverfahren, insbesondere mittels Klebe-, Niet- oder Schraubverfahren, mit der Faserverbundkomponente verbunden sind.

Gemäß einer zweiten Ausgestaltung, die eine Alternative zu der vorgenannten ersten Ausgestaltung mit dem oberen Metallabschnitt und dem unteren Metallabschnitt als separate Blechformteile ist, kann vorgesehen sein, dass ein sich entlang der Längsachse der B-Säule erstreckendes Blechformteil vorhanden ist, das den oberen Metallabschnitt und den unteren Metallabschnitt umfasst, wobei das Blechformteil zwischen dem oberen Abschlussrand des oberen Krafteinleitungsbereiches und dem unteren Abschlussrand des unteren Krafteinleitungsbereiches wenigstens eine Materialaussparung aufweist, die durch die Faserverbundkomponente zumindest teilweise ausgefüllt ist. Das Blechformteil erstreckt sich vorzugsweise über die gesamte Länge der B-Säule. Vorzugsweise ist die wenigstens eine Aussparung innerhalb des Blechformteils gestaltet, sodass die Krafteinleitungsbereiche, in einer Schnittebene durch die B-Säule betrachtet, die wenigstens eine Aussparung von insbesondere vier Seiten umgeben. Die Schnittebene kann parallel zur Längsachse verlaufen. Dadurch wird eine besonders stabile Verbindung zwischen der Faserverbundkomponente und dem Blechformteil bereitgestellt. Grundsätzlich denkbar und möglich ist aber auch, dass die wenigstens eine Aussparung zu zumindest einer Seite hin offen gestaltet ist.

Weiterhin kann das Blechformteil zumindest abschnittsweise wenigstens einen seitlichen Fügeflansch zur Verbindung von an die B-Säule angrenzender Bauteile mit der B-Säule aufweisen, wobei der wenigstens eine seitliche Fügeflansch die Faserverbundkomponente seitlich überragt. Auf diese Weise dient das Blechformteil als alleiniger Verbindungspartner für im eingebauten Zustand seitlich an die B-Säule angrenzender Bauteile, beispielsweise eine Türdichtung und/oder eine Fahrzeugaußenhaut und/oder eine Glasfläche.

Für sämtliche Ausgestaltungen der vorliegenden Erfindung gilt gleichermaßen, dass die seitlichen Fügeflansche einlagig sein können. Das heißt, eine Seitenkante der Faserverbundkomponente ist von einer Seitenkante des Fügeflansches derart beabstandet, dass der Fügeflansch einen einlagigen Flanschabschnitt zur Verbindung angrenzender Bauteile mit der B-Säule bildet. Somit können die Bauteile, die im eingesetzten Zustand an die B-Säule angrenzen, mittels Standardfügeverfahren mit dem metallischen Fügeflansch gefügt, insbesondere verschweißt oder verklebt werden. Das Faserverbundteil muss somit nicht mit den angrenzenden Bauteilen verbunden werden. Vorzugsweise weist die B-Säule mehrere, insbesondere zwei voneinander beabstandete, außenliegende Fügeflansche auf, die sich zumindest abschnittsweise entlang der Längsachse der B-Säule erstrecken. Um das Gewicht der B-Säule weiter zu verringern, kann der wenigstens eine Fügeflansch in Längsabschnitten der B-Säule, in denen keine Anbindung benachbarter Bauteile an die eingesetzte B-Säule erforderlich ist, gezielt ausgespart sein. Grundsätzlich denkbar und möglich ist aber auch, dass zur seitlichen Anbindung der benachbarten Bauteile in der Faserverbundkomponente seitlich herausragende Fügeflansche aus Metall eingebettet sind. Dies ist vor allem dann vorteilhaft, wenn die B-Säule die beiden voneinander beabstandeten Blechformteile aufweist.

Des Weiteren kann die B-Säule zwischen dem oberen Krafteinleitungsbereich und dem unteren Krafteinleitungsbereich zumindest abschnittsweise U-förmig ausgebildet sein, derart, dass auf einer Fahrzeuginnenseite der Kraftfahrzeugsäule ein Hohlraum zur Aufnahme von Fahrzeuganbauteilen gebildet ist. Der U-förmige Abschnitt kann vorzugsweise durch die Faserverbundkomponente gebildet sein. Entsprechend kann die Faserverbundkomponente zumindest abschnittsweise zwei Seitenstege und einen die beiden Seitenstege U-förmig miteinander verbindenden Mittelsteg aufweisen. In die Seitenstege können Funktionsteile, wie die seitlichen Fügeflansche aus Metall, eingebettet werden. Durch die insgesamt schalenförmige Ausgestaltung kann die Faserverbundkomponente zum einen höhere seitlich auf die B-Säule einwirkende Kräfte, die beispielsweise bei einem Seitenaufprall entstehen können, widerstehen. Zum anderen können in dem sich ergebenden Hohlraum Fahrzeuganbauteile, wie beispielsweise ein Schließkeil für eine Vordertüre und/oder ein Türschloss und/oder ein Türscharnier und/oder ein hinterer Türfeststeller und/oder eine Gurtrolle und/oder ein Gurtstraffer, aufgenommen und bei Bedarf an der Faserverbundkomponente befestigt werden. Der U-förmige Hohlraum öffnet sich zweckmäßigerweise in Richtung eines Fahrgastinnenraumes der Karosserie, sodass der Mittelsteg der Faserverbundkomponente außenliegend, das heißt auf einer dem Fahrgastinnenraum abgewandten Seite der B-Säule angeordnet ist. Somit ist zumindest ein mittlerer Stegbereich der B-Säule zumindest abschnittsweise ausschließlich durch die Faserverbundkomponente gebildet. Weiterhin kann die Faserverbundkomponente zumindest abschnittsweise auch ein Hutprofil aufweisen. Somit kann die Faserverbundkomponente zwei sich seitlich an den Seitenstegen anschließende Flansche aufweisen, um die Verbindungsflächen mit dem jeweiligen Metallabschnitt beziehungsweise dem sich in Längsrichtung der B-Säule erstreckenden Blechformteil, das die beiden Metallabschnitte umfasst, zu vergrößern.

Um das Crashverhalten der B-Säule weiter zu optimieren, kann die Faserverbundkomponente durch axiale oder multiaxiale Ausrichtung der Fasern an die Kundenvorgaben und die geforderten Crasheigenschaften angepasst werden. Neben der Ausrichtung der Fasern kann das Crashverhalten auch durch geeignete Materialauswahl der Fasern und/oder durch lokal unterschiedliche Wandstärken, die zum Beispiel durch Variierung der Anzahl an Faserlagen verändert werden kann, abschnittsweise angepasst werden. Des Weiteren kann auch die Konzentration an Fasern in der Faserverbundkomponente lokal variiert werden. Grundsätzlich möglich ist auch, dass die Faserverbundkomponente Bereiche aufweist, in denen keine Fasern vorhanden sind.

Weiterhin kann zur lokalen Verstärkung der Faserverbundkomponente zumindest ein metallischer Verstärkungseinleger in der Faserverbundkomponente eingebettet sein. Der zumindest eine Verstärkungseinleger kann im Schnitt durch die B-Säule betrachtet vollständig in der Faserverbundkomponente eingebettet sein. Der zumindest eine Verstärkungseinleger kann ein metallisches Blechteil sein, das beispielsweise durch Einflechten von Fasersträngen formschlüssig, tragend in die Gelegestruktur der umliegenden Fasermateriallagen der Faserverbundkomponente eingebunden sein kann. Dabei kann der Verstärkungseinleger, wie auch die Krafteinleitungsbereiche der Metallabschnitte, aufgrund seiner Oberflächenbeschaffenheit, respektive Rauigkeit und/oder eines Oberflächen-Beschichtungskonzeptes zur Matrix tragfähig eingebunden sein. Der zumindest eine Verstärkungseinleger kann aus einem kalt- oder warmumgeformten hoch-, höher- oder höchstfestem Stahl hergestellt sein. Weiterhin kann der zumindest eine Verstärkungseinleger eine variable Dicke, respektive Wandstärke aufweisen. Der zumindest eine Verstärkungseinleger kann die bei einem Crash-Fall einwirkenden Druckspannungen innerhalb der Faserverbundkomponente optimal aufnehmen und somit die Eigenschaften der Faserverbundkomponente in Bezug auf Zugfestigkeit verbessern.

Zwischen der Faserverbundkomponente und den in die Matrix eingebundenen Metalteilen, wie den Metallabschnitten oder dem zumindest einen Verstärkungseinleger, kann jeweils eine Sperr- beziehungsweise Entkopplungsschicht, beispielsweise aus einem Klebstoff, vorgesehen sein, um eine Kontaktkorrosion zwischen den Bauteilen zu verhindern.

Des Weiteren kann zumindest eines der in der B-Säule integrierten Blechteile eine variable Wandstärke über der Länge der B-Säule aufweisen. Auf diese Weise kann die Belastbarkeit der B-Säule gezielt lokal eingestellt werden. Zum Beispiel kann die B-Säule auf kundenspezifisch geforderte Funktionszielen an unterschiedliche Zonen der B-Säule (Dachanbindung, Flexzone im mittleren/oberen Säulenbereich, Deformationszone im Fußbereich, Schwelleranbindung), insbesondere im Zusammenspiel mit der Faserverbundkomponente, getrimmt, respektive angepasst werden. Beispielsweise können die Blechdicken zwischen 0,7 mm und 4,5 mm variieren. Insbesondere kann/können der obere Metallabschnitt und/oder der untere Metallabschnitt eine Blechdicke von 1 mm bis 4 mm aufweisen. Ein den oberen und den unteren Metallabschnitt gegebenenfalls verbindender metallischer Zentralabschnitt kann dagegen eine deutlich dünnere Blechdicke aufweisen, beispielsweise von 0,7 mm bis 2 mm, da die Hauptlast der B-Säule in diesem Bereich durch die Faserverbundkomponente getragen werden kann.

Um eine besonders leichte B-Säule mit einer geringen Anzahl an Bauteilen bereitzustellen, ist die Faserverbundkomponente zwischen den Krafteinleitungsbereichen des oberen und des unteren Metallabschnittes durch keine tragenden Strukturelemente der B-Säule überdeckt. Lediglich kleinere Bauteile, insbesondere Blechteile zur Abstützung oder Anbindung von Fahrzeuganbauteilen können an der vom Fahrzeuginnenraum abgewandten Außenseite der funktionsfertigen B-Säule angeordnet und/oder in der Faserverbundkomponente eingebettet sein. Vorzugsweise weist die B-Säule kein Innenblech, welches auch als Schließblech bezeichnet wird, auf. Somit kann es sich bei der B-Säule um eine sogenannte "offene Bauweise" handeln. Auf diese Weise weist die B-Säule nur einlagige Anbindungsstellen auf, nämlich den oberen Metallabschnitt und den unteren Metallabschnitt und die gegebenenfalls vorhandenen seitlichen Fügeflansche. Dadurch wird die Anbindung mittels konventioneller Fügetechniken an die Karosserie vereinfacht. Grundsätzlich möglich ist aber auch, dass die B-Säule ein solches Innenblech aufweist.

Eine weitere Lösung der oben genannten Aufgabe besteht in einer Kraftfahrzeugkarosserie mit zwei der vorbeschriebenen B-Säulen. Durch die erfindungsgemäße Karosserie ergeben sich dieselben Vorteile, wie sie im Zusammenhang mit der erfindungsgemäßen B-Säule beschrieben worden sind, sodass hier abkürzend auf obige Beschreibungen Bezug genommen wird. Dabei versteht es sich, dass alle genannten Ausgestaltungen der B-Säule auf die Karosserie übertragbar sind und umgekehrt. Insgesamt ist die erfindungsgemäße Karosserie gewichtsreduzierter und kann anspruchsvolle Crash-Lastfälle erfüllen.

Die Außenseite der B-Säule kann durch die Fahrzeugaußenhaut verdeckt sein, die üblicherweise erst nach Fertigstellung der Fahrzeugkarosserie an dieser, insbesondere den seitlichen Fügeflanschen der B-Säule befestigt wird. Um eine besonders leichte Fahrzeugkarosserie bereitzustellen, kann die Faserverbundkomponente der B-Säule aber auch im eingebauten Zustand zumindest bei geöffneter Fahrzeugtüre von außen sichtbar sein.

Bevorzugte Ausführungsbeispiele werden nachstehend anhand der Zeichnungsfiguren erläutert. Hierin zeigt:
- Figur 1: eine B-Säule gemäß einer ersten Ausführungsform in perspektivischer Ansicht;
- Figur 2: ein Blechformteil der B-Säule aus Figur 1 in perspektivischer Ansicht;
- Figur 3: die B-Säule in Querschnittsansicht entlang der in Figur 1 gezeigten Schnittlinie III-III;
- Figur 4: die B-Säule in Querschnittsansicht entlang der in Figur 1 gezeigten Schnittlinie IV-IV;
- Figur 5: die B-Säule in Querschnittsansicht entlang der in Figur 1 gezeigten Schnittlinie V-V;
- Figur 6: die B-Säule in Querschnittsansicht entlang der in Figur 1 gezeigten Schnittlinie VI-VI;
- Figur 7: die B-Säule mit einem Verstärkungseinleger in Querschnittsansicht entlang der in Figur 1 gezeigten Schnittlinie VI-VI;
- Figur 8: einen Teilausschnitt des Verstärkungseinlegers aus Figur 7;
- Figur 9: die B-Säule in Querschnittsansicht entlang der in Figur 1 gezeigten Schnittlinie IX-IX, wobei die B-Säule im eingebauten Zustand vereinfacht dargestellt ist;
- Figur 10: eine B-Säule gemäß einer zweiten Ausführungsform in perspektivischer Ansicht; und
- Figur 11: ein Blechformteil der B-Säule aus Figur 1 in perspektivischer Ansicht.

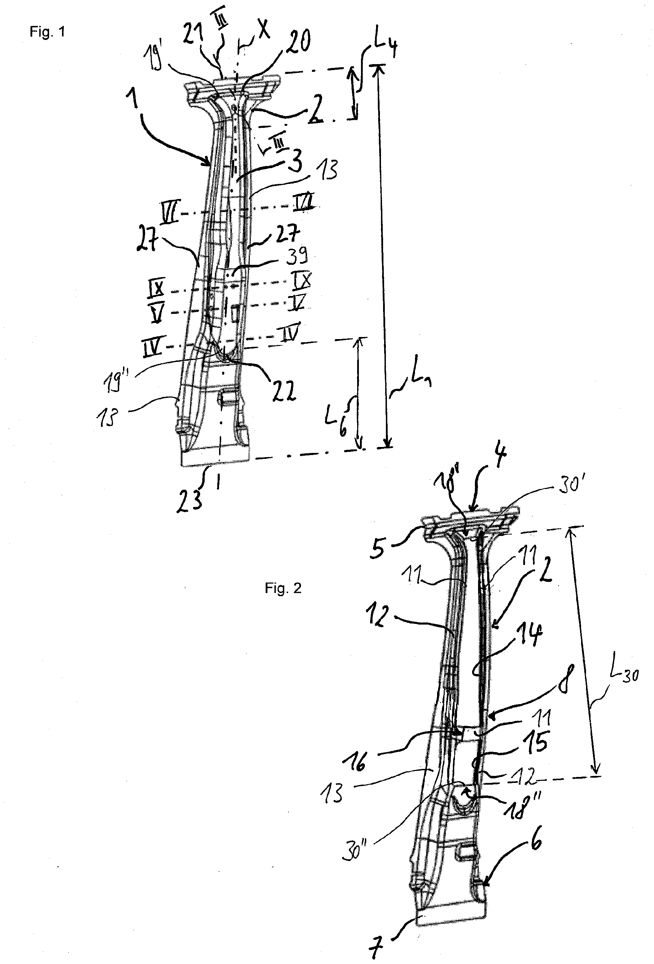

In Figuren 1 bis 9 ist eine B-Säule 1 einer Karosserie eines Kraftfahrzeuges gemäß einer ersten Ausführungsform der vorliegenden Erfindung dargestellt. Die B-Säule 1 hat eine längliche, hohle Grundform und erstreckt sich entlang einer Längsachse X. Im eingebauten Zustand, indem die funktionsfertige B-Säule 1 als tragendes Strukturelement in der Karosserie integriert ist, verbindet die B-Säule 1 einen Dachbereich der Karosserie mit einem Schwellerbereich der Karosserie.

Die B-Säule 1 ist ein Hybridbauteil, das ein sich entlang der Längsachse X erstreckendes Blechformteil 2 und eine mit diesem unlösbar verbundene Faserverbundkomponente 3 aufweist. In der Figur 1 ist die funktionsfertige B-Säule 1 gezeigt, die zumindest abschnittsweise ein hutförmiges Profil aufweist. Die B-Säule 1 kann bei einem herkömmlichen Personenkraftwagen üblicherweise eine Länge L₁ von etwa 1,30 m bis 1,50 m aufweisen.

In der Figur 2 ist die B-Säule 1 in einem unfertigen Zustand gezeigt, in dem die Faserverbundkomponente 3 noch nicht hergestellt wurde. Zunächst wird das Blechformteil 2 hergestellt. Erst danach wird die Faserverbundkomponente 3, beispielsweise durch Aufbringen oder Anspritzen eines Faserverbundwerkstoffes auf das Blechformteil 2 hergestellt. Hierbei werden Krafteinleitungsbereiche 18 des Blechformteils 2 beispielsweise in den Faserverbundwerkstoff einlaminiert. Nach Aushärten oder Erstarren der Matrix des Faserverbundwerkstoffes ist die Faserverbundkomponente 3 fertiggestellt, die dann unlösbar mit dem Blechformteil 2 verbunden ist. Das Blechformteil 2 und die Faserverbundkomponente 3 bilden gemeinsam die hybride B-Säule 1.

Das Blechformteil 2 kann ein kaltumgeformtes Formteil sein, das beispielsweise aus einem Dualphasen-Stahlblech hergestellt sein kann. Das Blechformteil 2 erstreckt sich über die gesamte Länge L₁ der B-Säule 1 und kann über der Länge L₁ eine variable Wandstärke, respektive Blechdicke aufweisen. Die Wandstärke kann entsprechend den kundenspezifisch geforderten Crashzonen angepasst sein.

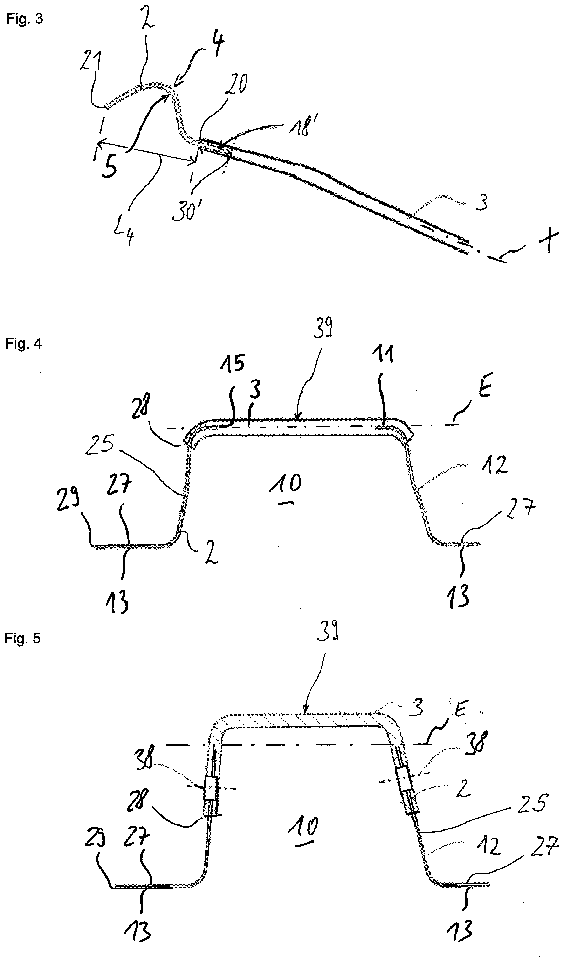

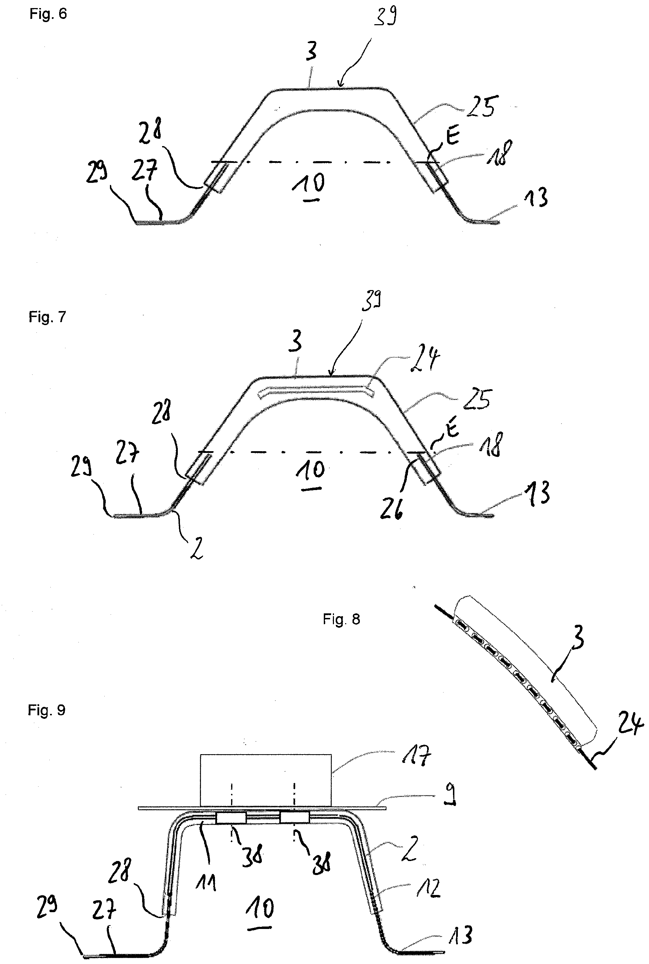

Das Blechformteil 2 ist hier als ein durchgehendes Blechformteil gestaltet, das den metallischen Grundkörper der B-Säule 1 bildet. Zur Anbindung der B-Säule 1 an den Dachbereich der Karosserie weist das Blechformteil 2 einen oberen Metallabschnitt 4 auf. In der Figur 3 ist erkennbar, dass der obere Metallabschnitt 4 einen flanschartig ausgebildeten oberen Anbindungsbereich 5 mit einem im Längsschnitt durch die B-Säule 1 betrachtet etwa U-förmigen Profil aufweist, um im eingebauten Zustand der B-Säule 1 den Dachbereich, insbesondere einen Dachholm von außen zu umgreifen. In den Figuren 1 und 2 ist erkennbar, dass zur Anbindung an den Schwellerbereich der Karosserie das Blechformteil 2 einen unteren Metallabschnitt 6 aufweist. Der untere Metallabschnitt 6 umfasst einen unteren Anbindungsbereich 7, der im eingebauten Zustand den Schwellerbereich von außen umgreifen oder in diesen eingesteckt sein kann. Zwischen dem oberen Metalabschnitt 4 und dem unteren Metallabschnitt 6 erstreckt sich ein Zentralabschnitt 8, der der seitlichen Anbindung angrenzender Bauteile, wie beispielsweise einer Türdichtung, einer Glasfläche, einer in der Figur 9 vereinfacht dargestellten Kraftfahrzeugaußenhaut 9 oder dergleichen, dient. Eine Länge L₄ des oberen Metallabschnittes 4 ist kleiner oder gleich 15 % der Länge L₁ der B-Säule 1, hier etwa 12 % der Länge L₁. Eine Länge L₆ des unteren Metallabschnittes 6 ist kleiner oder gleich 25 % der Länge L₁ der B-Säule 1, hier etwa 20 % der Länge L₁.

Weiterhin weist das Blechformteil 2 zumindest zwischen dem oberen Anbindungsbereich 5 und dem unteren Anbindungsbereich 7 im Querschnitt durch die B-Säule 1 betrachtet ein hutförmiges Profil auf, das auf einer einem Fahrgastinnenraum zugewandten Fahrzeuginnenseite der B-Säule 1 einen Hohlraum 10 zur Aufnahme von Fahrzeuganbauteilen hat. Hierzu umfasst das Blechformteil 2 einen zentral angeordneten Mittelsteg 11, zwei seitlich angrenzende Seitenstege 12 und zwei radial außen an die Seitenstege 12 angrenzende Fügeflansche 13 auf. Das Blechformteil 2 weist zumindest im Bereich des Mittelsteges 11 eine obere Aussparung 14 und eine untere Aussparung 15 auf, wobei sich zumindest eine der Aussparungen 14, 15 zumindest über einen Teilbereich der Seitenstege 12 erstrecken kann. Die obere Aussparung 14 ist zumindest abschnittsweise im oberen Metallabschnitt 4 und dem Zentralabschnitt 8 gestaltet und kann sich über mindestens das 0,25-fache der Länge L₁ der B-Säule 1, hier über etwa 40 bis 45 % der Länge L₁ erstrecken. Die untere Aussparung 15 ist im unteren Bereich des Zentralschnittes 8 und zumindest abschnittsweise im unteren Metallabschnitt 6 ausgebildet. Die untere Aussparung 15 kann sich über etwa das 0,1-fache der Länge L₁ der B-Säule 1, hier über etwa 10 % der Länge L₁ erstrecken. Zwischen den beiden Aussparungen 14, 15 weist der Mittelsteg 11 einen Halteabschnitt 16 auf, an dem zumindest ein Teil der Fahrzeuganbauteile, beispielsweise ein, in der Figur 9 gezeigter, Scharnierkörper 17 einer an der B-Säule 1 angelenkten Hintertüre der Karosserie, befestigt sein kann. Die hierzu verwendeten Verbindungsmittel, zum Beispiel Schrauben oder Nieten, können neben der Befestigung der Fahrzeuganbauteile zusätzlich zur form- und kraftschlüssigen Verbindung zwischen dem Blechformteil 2 und der Faserverbundkomponente 3 verwendet werden.

Die Faserverbundkomponente 3 substituiert das Blechformteil 2 im Bereich der Aussparungen 14, 15, die zumindest im Wesentlichen im Mittelsteg 11 des Blechformteils 2 ausgebildet sind. Somit ist eine von einem Fahrgastinnenraum abgewandte Außenseite der B-Säule 1, zumindest in einem mittleren Bereich der B-Säule 1, durch die Faserverbundkomponente 3 gebildet. Damit ist die Faserverbundkomponente 3 zumindest teilweise auf der Druckseite der B-Säule vorgesehen. Um die Faserverbundkomponente 3 mit dem Blechformteil 2 unlösbar zu verbinden und als tragende Strukturkomponente in der B-Säule einzubinden, weist das Blechformteil 2 die Krafteinleitungsbereiche 18 auf, die in der Matrix des Faserverbundwerkstoffes, aus dem die Faserverbundkomponente 3 hergestellt ist, eingebunden sind. Bereiche des Mittelsteges 11 und/oder der Seitenstege 12 sind ebenfalls in der Faserverbundkomponente 3

eingebettet, sodass auch hierüber die Faserverbundkomponente 3 in den Kraftfluss der B-Säule 1 integriert ist.

Der obere Metallabschnitt 4 weist den oberen Krafteinleitungsbereich 18' auf, der mit einem oberen Abschlussrand 30' abschließt, die die obere Aussparung 14 axial nach oben begrenzt, wie in der Figur 3 dargestellt. Der untere Metallabschnitt 6 weist einen vom oberen Krafteinleitungsbereich 18' axial beabstandeten unteren Krafteinleitungsbereich 18" mit einem unteren Abschlussrand 30" auf, die die untere Aussparung 15 axial nach unten begrenzt. Die Faserverbundkomponente 3 erstreckt sich mit einem oberen Endbereich 19' über den oberen Abschlussrand 30' hinaus in den oberen Krafteinleitungsbereich 18 und mit einem unteren Endbereich 19" über den unteren Abschlussrand 30" hinaus in den unteren Krafteinleitungsbereich 18, sodass der obere Krafteinleitungsbereich 18' und der untere Krafteinleitungsbereich 18" in der Faserverbundkomponente 3 eingebettet sind. In der Figur 2 ist erkennbar, dass ein Abstand L₃₀ zwischen dem oberen Abschlussrand 30' und dem unteren Abschlussrand 30" mindestens 25 % und maximal 95 % der Gesamtlänge L₁ der B-Säule 1 betragen kann und hier etwa 60 % beträgt.

In der Figur 4 ist ein Querschnitt durch die B-Säule 1 entlang der in der Figur 1 gezeigten Schnittlinie IV-IV gezeigt, die die untere Aussparung 15 schneidet. Erkennbar ist, dass die untere Aussparung 15 innerhalb des Mittelsteges 11 des Blechformteils 2 ausgebildet ist, sodass ein zentraler Schenkel 39 der B-Säule 1 in dem hier gezeigten Abschnitt aus dem Faserverbundwerkstoff der Faserverbundkomponente 3 und dem Metall des Blechformteils 2 gebildet ist. In den Figuren 5 bis 7 sind weitere Querschnitte durch die B-Säule 1 gezeigt, wobei die zugehörigen Schnittlinien in der Figur 1 eingezeichnet sind. Erkennbar ist, dass sich die Aussparung, hier die obere Aussparung 14, sowohl über den Mittelsteg 11 als auch über die Seitenstege 12 des Blechformteils 2 erstrecken kann. Somit kann der zentrale Schenkel 39 der B-Säule 1 und auch Seitenwände 25 der B-Säule 1 zumindest abschnittsweise aus dem Faserverbundwerkstoff der Faserverbundkomponente 3 gestaltet sein. Die Krafteinleitungsbereiche 18 sind, im Schnitt durch die B-Säule 1 betrachtet, vollständig in der Faserverbundkomponente 3 eingebettet, sodass das Blechformteil 2 mit der Faserverbundkomponente 3 unlösbar verbunden ist. Des Weiteren ist in der Figur 9 ein Querschnitt durch die B-Säule 1 im Bereich des Halteabschnitts 16 gezeigt. Erkennbar ist, dass der Mittelsteg 11 des Blechformteils 2 entlang des Halteabschnitts 16, im Schnitt durch die B-Säule 1 betrachtet, vollständig in der Faserverbundkomponente 3 eingebettet ist.

Somit überdeckt die Faserverbundkomponente 3 die Aussparungen 14, 15 vollständig, respektive füllt diese aus. Entsprechend ist der zentrale Schenkel 39 der zumindest abschnittsweise hutprofil-förmig gestalteten B-Säule 1 zumindest im Wesentlichen aus dem Faserverbundwerkstoff der Faserverbundkomponente 3 gebildet. Die Faserverbundkomponente 3 erstreckt sich sowohl über die obere Aussparung 14 als auch über die untere Aussparung 15 und ist zusammenhängend, das heißt nicht unterbrochen ausgebildet. Weiterhin folgt die Form der zumindest im Wesentlichen U-förmig gestalteten Faserverbundkomponente 3 zumindest abschnittsweise dem Hutprofil des Blechformteils 2. Somit ist die Faserverbundkomponente 3 zumindest im Wesentlichen U-förmig gestaltet und begrenzt den offenen Hohlraum 10 einseitig. In der Figur 1 ist erkennbar, dass die Faserverbundkomponente 3 sich über mindestens das 0,25-fache der Länge L₁ der B-Säule 1 erstreckt, hier insbesondere etwa 70 % der Länge L₁ ist. Ein oberes Ende 20 der Faserverbundkomponente 3 ist von einem oberen Ende 21 der B-Säule 1, respektive des Blechformteils 2, mit einem Abstand von etwa 5 % der Länge L₁ beabstandet. Ein unteres Ende 22 der Faserverbundkomponente 3 ist von einem unteren Ende 23 der B-Säule 1, respektive des Blechformteils 2, mit einem Abstand von etwa 20 bis 25 % der Länge L₁ beabstandet.

Zur hochfesten Auslegung des vor allem zum Schutz der Insassen relevanten mittleren Bereichs der B-Säule 1 kann die Faserverbundkomponente 3 optional zumindest einen Verstärkungseinleger, respektive metallischen Einleger 24 aufweisen. Der Verstärkungseinleger 24 ist in den Figuren 7 und 8 gezeigt, wobei in der Figur 6 die B-Säule 1 ohne einen solchen Einleger dargestellt ist.

In der Figur 8 ist erkennbar, dass der Verstärkungseinleger 24 bei Herstellung der Faserverbundkomponente 3 durch Einflechten eines Teils der Fasern formschlüssig, respektive tragend, in die Legestruktur der umliegenden Fasern eingebunden sein kann. Dabei kann der Verstärkungseinleger 24 aufgrund seiner Oberflächenbeschaffenheit, respektive Rauigkeit und/oder eines abgestimmten Oberflächen-Beschichtungskonzeptes zu einer die Fasern des Faserverbundmaterials umgebenden Matrix tragfähig eingebunden sein. Der Verstärkungseinleger 24 kann, je nach kundenspezifischer Anforderung an das Crashverhalten, aus einem kalt- oder warmumgeformten hoch-, höher- oder höchstfestem Stahl hergestellt sein. Weiterhin kann der Verstärkungseinleger 24 eine variable Wandstärke aufweisen. In dem in Figur 7 gezeigten Querschnitt ist erkennbar, dass der Verstärkungseinleger 24 hier ein etwa U-förmiges, respektive tellerförmiges Profil aufweisen kann. Grundsätzlich kann der Verstärkungseinleger 24 aber auch zum einen schmaler, insbesondere streifenförmig, oder zum anderen deutlich breiter ausgestaltet sein, sodass sich der Verstärkungseinleger 24 auch deutlich tiefer in die Seitenwände 25 der B-Säule 1 erstrecken kann, soweit die Seitenwände 25 durch die Faserverbundkomponente 3 gebildet sind.

Zwischen der Faserverbundkomponente 3 und den Krafteinleitungsbereichen 18 des Blechformteils 2 ist hier jeweils eine Sperr- beziehungsweise Entkopplungsschicht 26, beispielsweise aus einem Klebstoff, vorgesehen, um eine Kontaktkorrosion zwischen den Bauteilen, nämlich dem Blechformteil 2 und der Faserverbundkomponente 3 zu verhindern. Ebenso kann zwischen der Faserverbundkomponente 3 und dem wenigstens einen Verstärkungseinleger 24 oder anderen in der Faserverbundkomponente 3 eingebundenen metallischen Komponenten die Sperr- beziehungsweise Entkopplungsschicht 26 vorgesehen sein.

Die funktionsfertige B-Säule 1, die in der Figur 1 dargestellt ist, weist seitlich jeweils einen einlagigen Flanschabschnitt 27 auf. In diesen Bereichen sind die Fügeflansche 16 des Blechformteils 2 nicht von der Faserverbundkomponente 3 überdeckt, sodass die B-Säule 1 im eingesetzten Zustand nur über das Blechformteil 2 an benachbarte Bauteile, wie die Fahrzeugaußenhaut 9 und/oder eine Türdichtung und/oder eine Glasfläche, angebunden wird. Konkret ist eine Seitenkante 28 der Faserverbundkomponente 3 von einer Seitenkante 29 des Blechformteils 2 derart beabstandet, dass das Blechformteil 2 zwischen der Seitenkante 28 der Faserverbundkomponente 3 und der Seitenkante 29 des Blechformteils 2 den einlagigen Flanschabschnitt 27 zur Verbindung angrenzender Bauteile mit der B-Säule 1 aufweist.

Zur Herstellung der hybriden B-Säule 1 kann der Faserverbundwerkstoff beispielsweise in eine Legeform eingelegt werden, wobei die Krafteinleitungsbereiche 18 des Blechformteils 2 in die Matrix des Faserverbundwerkstoffes eingebettet werden. Auf diese Weise kann das Blechformteil 2 zum Beispiel durch Einlaminieren oder Faserspritz-, Press- oder Injektionsverfahren mit der Faserverbundkomponente 3 unlösbar verbunden werden. Nach dem Aushärten oder Erstarren der Matrix ist die Faserverbundkomponente 3 unlösbar mit dem Blechformteil 2 verbunden. Somit ist die Faserverbundkomponente 3 strukturell tragend in die hybride B-Säule 1 eingebunden, sodass die Hauptlast der B-Säule 1 im Bereich der beiden Aussparungen 14, 15 durch die Faserverbundkomponente 3 übernommen wird.

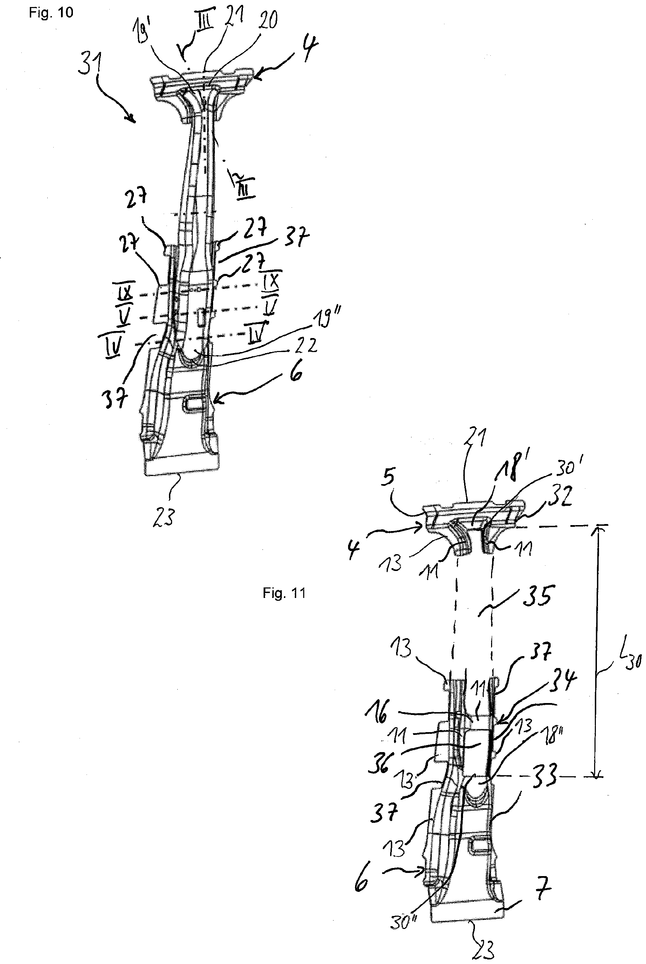

In Figuren 10 und 11 ist eine B-Säule 31 gemäß einer weiteren Ausführungsform der vorliegenden Erfindung dargestellt, die weitestgehend den vorbeschriebenen Ausführungsformen gemäß den Figuren 1 bis 9 entspricht, sodass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in den Figuren 1 bis 9. Der wesentliche Unterschied besteht in der Einbindung des oberen Metallabschnitts und des unteren Metallabschnitts in die Faserverbundkomponente 3.

In der Figur 10 ist die B-Säule 31 in einem funktionsfertigen Zustand und in der Figur 11 ist die B-Säule 31 in einem unfertigen Zustand gezeigt, bevor der Faserverbundwerkstoff auf ein oberes Blechformteil 32 und ein unteres Blechformteil 33 aufgebracht wird. Die zwei Blechformteile 32, 33 sind axial voneinander beabstandet und ausschließlich über die Faserverbundkomponente 3 miteinander verbunden. Das obere Blechformteil 32 umfasst den oberen Metallabschnitt 4 und das untere Blechformteil 33 umfasst den unteren Metallabschnitt 6 sowie einen Funktionsabschnitt 34 zur Anbindung von Fahrzeuganbauteilen an die B-Säule 31.

Insbesondere in der Figur 11 ist erkennbar, dass die B-Säule 31 eine obere Aussparung 35 und eine untere Aussparung 36 aufweist, die durch die Faserverbundkomponente 3 überdeckt, respektive ausgefüllt ist. Zwischen den beiden Blechformteilen 32, 33 ist die obere Aussparung 35 gestaltet, die sich über etwa das 0,2 bis 0,6-fache der Länge L₁ der B-Säule 31, hier über etwa 30 % der Länge L₁, erstrecken kann. Die obere Aussparung 35 erstreckt sich sowohl in das obere Blechformteil 32 als auch in das untere Blechformteil 33 hinein. Die untere Aussparung 36 ist innerhalb des unteren Blechformteils 33 ausgebildet und kann sich über etwa das 0,1 bis 0,3-fache der Länge L₁ der B-Säule 1, hier über etwa 10 % der Länge L₁ erstrecken.

Beide Blechformteile 32, 33 weisen zur unlösbaren Verbindung mit der Faserverbundkomponente 3 die Krafteinleitungsbereiche 18', 18" auf, die im Schnitt durch die B-Säule 31 betrachtet vollständig in der Faserverbundkomponente 3 eingebettet sind. Die Krafteinleitungsbereiche 18', 18" des oberen und des unteren Blechformteils 32, 33 umgeben die obere Aussparung 35 jeweils U-förmig. Der dem oberen Blechformteil 32 zugeordnete Abschlussrand 30' begrenzt die obere Aussparung 35 axial nach oben, und der dem unteren Blechformteil 33 zugeordnete untere Abschlussrand 30" begrenzt die untere Aussparung 36 axial nach unten. Der Abstand L₃₀ zwischen dem oberen Abschlussrand 30' und dem unteren Abschlussrand 30" kann mindestens 25 % und maximal 95 % der Gesamtlänge L₁ der B-Säule 1 betragen und beträgt, hier, etwa 60 %.

Zwischen den beiden Aussparungen 35, 36 weist das untere Blechformteil 33 im Bereich des Mittelsteges 11 den Halteabschnitt 16 auf, an dem zumindest ein Teil der Fahrzeuganbauteile, beispielsweise der in der Figur 9 gezeigte Scharnierkörper 17, befestigt sein kann. Hierzu verwendete Verbindungsmittel 38, zum Beispiel Schrauben oder Nieten, können neben der Befestigung der Fahrzeuganbauteile zusätzlich zur form- und kraftschlüssigen Verbindung zwischen dem unteren Blechformteil 33 und der Faserverbundkomponente 3 verwendet werden.

Zur weiteren Gewichtsreduzierung ist der Fügeflansch 13 in Bereichen, in denen keine Anbindung an benachbarte Bauteile erforderlich ist, durch Ausnehmungen 37 gezielt ausgespart.

### Bezugszeichenliste

- 1: B-Säule
- 2: Blechformteil
- 3: Faserverbundkomponente
- 4: oberer Metallabschnitt
- 5: Anbindungsbereich
- 6: unterer Metallabschnitt
- 7: Anbindungsbereich
- 8: Zentralabschnitt
- 9: Kraftfahrzeugaußenhaut
- 10: Hohlraum
- 11: Mittelsteg
- 12: Seitensteg
- 13: Fügeflansch
- 14: Aussparung
- 15: Aussparung
- 16: Halteabschnitt
- 17: Scharnierkörper
- 18: Krafteinleitungsbereich
- 19: Endbereich
- 20: Ende
- 21: Ende
- 22: Ende
- 23: Ende
- 24: Einleger
- 25: Seitenwand
- 26: Sperrschicht
- 27: Flanschabschnitt
- 28: Seitenkante
- 29: Seitenkante
- 30: Abschlussrand
- 31: B-Säule
- 32: Blechformteil
- 33: Blechformteil
- 34: Funktionsabschnitt
- 35: Aussparung
- 36: Aussparung
- 37: Ausnehmung
- 38: Verbindungsmittel
- 39: Schenkel

- E: Ebene
- L₁: Länge
- L4: Länge
- L6: Länge
- L₃₀: Abstand
- X: Längsachse

## Patentansprüche

1. B-Säule (1; 31) für eine Kraftfahrzeugkarosserie, die sich entlang einer Längsachse (X) erstreckt, umfassend:
einen oberen Metallabschnitt (4) zur Anbindung der B-Säule (1; 31) an einen Dachbereich der Karosserie und einen unteren Metallabschnitt (6) zur Anbindung der B-Säule (1; 31) an einen Schwellerbereich der Karosserie, und
eine Faserverbundkomponente (3), die Fasern und eine Kunststoffmatrix umfasst,
**dadurch gekennzeichnet,**
**dass** der obere Metallabschnitt (4) einen oberen Krafteinleitungsbereich (18') und der untere Metallabschnitt (6) einen vom oberen Krafteinleitungsbereich (18') axial beabstandeten unteren Krafteinleitungsbereich (18") aufweist, wobei der obere Krafteinleitungsbereich (18') und der untere Krafteinleitungsbereich (18") in der Faserverbundkomponente (3) eingebettet sind.

2. B-Säule (1; 31) nach Anspruch 1, **dadurch gekennzeichnet,**
**dass** der obere Metallabschnitt (4) einen oberen Abschlussrand (30') aufweist, und dass der untere Metallabschnitt (6) einen unteren Abschlussrand (30") aufweist, wobei sich die Faserverbundkomponente (3) mit einem oberen Endbereich (19') über den oberen Abschlussrand (30') in den oberen Krafteinleitungsbereich (18') und mit einem unteren Endbereich (19") über den unteren Abschlussrand (39") in den unteren Krafteinleitungsbereich (18") hinein erstreckt.

3. B-Säule (1; 31) nach Anspruch 2, **dadurch gekennzeichnet,**
**dass** ein Abstand (L₃₀) zwischen dem oberen Abschlussrand (30') und dem unteren Abschlussrand (30") mindestens 25 % und maximal 95 % der Gesamtlänge (L₁) der B-Säule (1; 31) beträgt.

4. B-Säule (1) nach Anspruch 2 oder 3, **dadurch gekennzeichnet,**
**dass** ein sich entlang der Längsachse (X) der B-Säule (1) erstreckendes Blechformteil (2) vorhanden ist, das den oberen Metallabschnitt (4) und den unteren Metallabschnitt (6) umfasst, wobei das Blechformteil (2) zwischen dem oberen Abschlussrand (30') des oberen Krafteinleitungsbereiches (18') und dem unteren Abschlussrand (30") des unteren Krafteinleitungsbereiches (18") wenigstens eine Aussparung (14, 15) aufweist, die zumindest teilweise durch die Faserverbundkomponente (3) ausgefüllt ist.

5. B-Säule (31) nach einem der Ansprüche 1 bis 3, **dadurch gekennzeichnet, dass** der obere Metallabschnitt (4) und der untere Metallabschnitt (6) durch separate Blechformteile (32, 33) gebildet sind, die voneinander beabstandet sind, wobei der obere Metallabschnitt (4) und der untere Metallabschnitt (6) über die Faserverbundkomponente (3) miteinander verbunden sind.

6. B-Säule (1; 31) nach einem der Ansprüche 1 bis 5, **dadurch gekennzeichnet, dass** die Faserverbundkomponente (3) in sich zusammenhängend ausgebildet ist.

7. B-Säule (1; 31) nach einem der Ansprüche 1 bis 6, **dadurch gekennzeichnet, dass** die Faserverbundkomponente (3) sich über mindestens das 0,25-fache einer Gesamtlänge (L₁) der B-Säule erstreckt, insbesondere zwischen 50 % und 90 % der Gesamtlänge (L₁) der B-Säule ist.

8. B-Säule (1; 31) nach einem der Ansprüche 1 bis 7, **dadurch gekennzeichnet, dass** ein unteres Ende (22) der Faserverbundkomponente (3) von einem unteren Ende (23) der B-Säule (1; 31) mit einem Abstand von mindestens 10 cm, insbesondere mit einem Abstand zwischen 10 cm und 60 cm, beabstandet ist, und/oder dass ein oberes Ende (20) der Faserverbundkomponente (3) von einem oberen Ende (21) der B-Säule () mit einem Abstand von mindestens 5 cm, insbesondere mit einem Abstand zwischen 5 cm und 40 cm, beabstandet ist.

9. B-Säule (1; 31) nach einem der Ansprüche 1 bis 8, **dadurch gekennzeichnet, dass** der obere Metallabschnitt (4) und/oder der untere Metallabschnitt (6) zumindest abschnittsweise wenigstens einen seitlichen Fügeflansch (13) zur Verbindung von an die B-Säule (31) angrenzender Bauteile mit der B-Säule (31) aufweist.

10. B-Säule (1; 31) nach Anspruch 9, **dadurch gekennzeichnet,**
**dass** der wenigstens eine seitliche Fügeflansch (13) die Faserverbundkomponente (3) seitlich überragt.

11. B-Säule (1; 31) nach einem der Ansprüche 1 bis 10, **dadurch gekennzeichnet, dass** die B-Säule (1; 31) zwischen dem oberen Krafteinleitungsbereich (18') und dem unteren Krafteinleitungsbereich (18") zumindest abschnittsweise U-förmig ausgebildet ist, derart, dass auf einer Fahrzeuginnenseite der B-Säule (1; 31) ein Hohlraum (10) zur Aufnahme von Fahrzeuganbauteilen gebildet ist.

12. B-Säule (1; 31) nach einem der Ansprüche 1 bis 11, **dadurch gekennzeichnet, dass** zur lokalen Verstärkung der B-Säule (1; 31) zumindest ein metallischer Verstärkungseinleger (24) in der Faserverbundkomponente (3) eingebettet ist.

13. B-Säule (1; 31) nach einem der Ansprüche 1 bis 12, **dadurch gekennzeichnet, dass** der obere Metallabschnitt (4) und/oder der untere Metallabschnitt (6) eine variable Wandstärke über der Länge (L₁) der B-Säule (1; 31) aufweist.

14. Kraftfahrzeugkarosserie mit zwei B-Säulen (1; 31), wobei die beiden B-Säulen (1; 31) nach einem der Ansprüche 1 bis 13 gestaltet sind.

## Claims

1. B-pillar (1; 31) for a motor vehicle body, which extends along a longitudinal axis (X), comprising:
an upper metal portion (4) for connecting the B-pillar (1; 31) to a roof area of the motor vehicle body and a lower metal portion (6) for connecting the B-pillar (1; 31) to a sill area of the motor vehicle body; and
a fiber composite component (3) comprising fibers and a plastic matrix,
**characterised in**
**that** the upper metal portion (4) comrises an upper region for force introduction (18'), and the lower metal portion (6) comprises a lower region for force introduction (18") axially spaced from the upper region for force introduction (18'), wherein the upper region for force introduction (18') and the lower region for force introduction (18") are embedded into the fiber composite component (3).

2. B-pillar (1; 31) according to claim 1, **characterised in**
**that** the upper metal portion (4) comprises an upper end edge (30'), and that the lower metal portion (6) comprises a lower end edge (30"), wherein the fiber composite component (3) extends with an upper end region (19') across the upper end edge (30') into the upper force introduction region (18') and extends with a lower end region (19") across the lower end edge (39") into the lower force introduction region (18").

3. B-pillar (1; 31) according to claim 2, **characterised in**
**that** a distance (L₃₀) between the upper end edge (30') and the lower end edge (30") is at least 25% and at most 95% of the total length (L₁) of the B-pillar (1; 31).

4. B-pillar (1) according to claim 2 or 3, **characterised in**
**that** a sheet metal formed part (2) exdending along the longitudinal axis (X) of the B-pillar (1) is provided that comprises the upper metal portion (4) and the lower metal portion (6), wherein the sheet metal formed part (2) comprises, between the upper end edge (30') of the upper region for force introduction (18') and the lower end edge (30") of the lower region for force introduction (18"), at least one recess (14, 15) which is at least partially filled by the fiber composite component (3).

5. B-pillar (31) according to any one of claims 1 to 3, **characterised in**
**that** the upper metal portion (4) and the lower metal portion (6) are formed by separate sheet metal formed parts (32, 33) which are spaced from each other, wherein the upper metal portion (4) and the lower metal portion (6) are joined to one another via the fiber composite component (3).

6. B-pillar (1; 31) according to any one of claims 1 to 5, **characterised in**
**that** the fiber composite component (3) is configured as an integral component.

7. B-pillar (1; 31) according to any one of claims 1 to 6, **characterised in**
**that** the fiber composite component (3) extends along at least 0.25 times a total length (L1) of the B-pillar, especially extends along between 50% and 90% of the total length (L1) of the B-pillar.

8. B-pillar (1; 31) according to any one of claims 1 to 7, **characterised in**
**that** a lower end (22) of the fiber composite component (3) is spaced from a lower end (23) of the B-pillar (1; 31) at a distance of at least 10 cm, in particular at a distance of between 10 cm and 60 cm, and/or that an upper end (20) of the fiber composite component (3) is spaced from an upper end (21) of the B-pillar (1; 31) at a distance of at least 5 cm, in particular at a distance of between 5 cm and 40 cm.

9. B-pillar (1; 31) according to any one of claims 1 to 8, **characterised in**
**that** the upper metal portion (4) and/or the lower metal portion (6) comprises, at least partially, at least one lateral joining flange (13) for connecting with the B-pillar (31) components adjacent to the B-pillar (31).

10. B-pillar (1; 31) according to claim 9, **characterised in**
**that** the at least one lateral joining flange (13) laterally projects beyond the fiber composite component (3).

11. B-pillar (1; 31) according to any one of claims 1 to 10, **characterised in**
**that** between the upper region for force introduction (18') and the lower region for force introduction (18"), the B-pillar (1; 31) is at least partially U-shaped such that a cavity (10) is formed on a vehicle interior side of the B-pillar (1; 31) for receiving vehicle add-on parts.

12. B-pillar (1; 31) according to any one of claims 1 to 11, **characterised in**
**that** at least one metallic reinforcing insert (24) is embedded into the fiber composite component (3) for local reinforcement of the B-pillar (1; 31).

13. B-pillar (1; 31) according to any one of claims 1 to 12, **characterised in**
**that** the upper metal portion (4) and/or the lower metal portion (6) comprises a variable wall thickness over the length (L₁) of the B-pillar (1; 31).

14. Motor vehicle body comprising two B-pillars (1; 31), wherein the two B-pillars (1; 31) are configured according to any one of claims 1 to 13.

## Revendications

1. Pied milieu (1 ; 31) pour une carrosserie de véhicule, qui s'étend le long d'un axe longitudinal (X), comprenant :
une section métallique supérieure (4) pour raccorder le pied milieu (1; 31) à une zone de toit de la carrosserie et une section métallique inférieure (6) pour raccorder le pied milieu (1 ; 31) à une zone de seuil de la carrosserie, et
un composant en fibres composites (3) qui comprend des fibres et une matrice de matière plastique,
**caractérisé en ce que**
la section métallique supérieure (4) comporte une zone d'introduction de force supérieure (18') et la section métallique inférieure (6) une zone d'introduction de force inférieure (18") axialement à distance de la zone d'introduction de force supérieure (18'), sachant que la zone d'introduction de force supérieure (18') et la zone d'introduction de force inférieure (18") sont incorporées dans le composant à fibres composites (3).

2. Pied milieu (1; 31) selon la revendication 1, **caractérisé en ce que**
la section métallique supérieure (4) comporte un bord de fermeture supérieur (30') et **en ce que** la section métallique inférieure (6) comporte un bord de fermeture inférieur (30"), sachant que le composant à fibres composites (3) s'étend avec une zone d'extrémité supérieure (19') sur le bord de fermeture supérieur (30') dans la zone d'introduction de force supérieure (18') et avec une zone d'extrémité inférieure (19") sur le bord de fermeture inférieur (39") dans la zone d'introduction de force inférieure (18").

3. Pied milieu (1; 31) selon la revendication 2, **caractérisé en ce qu'**
une distance (L₃₀) entre le bord de fermeture supérieur (30') et le bord de fermeture inférieur (30") représente au minimum 25 % et au maximum 95 % de la longueur totale (L₁) du pied milieu (1 ; 31) .

4. Pied milieu (1) selon la revendication 2 ou 3, **caractérisé en ce qu'**
une pièce formée en tôle (2) s'étendant le long de l'axe longitudinal (X) du pied milieu (1) est présente, qui comprend la section métallique supérieure (4) et la section métallique inférieure (6), sachant que la pièce formée en tôle (2) comporte entre le bord de fermeture supérieur (30') de la zone d'introduction de force supérieure (18') et le bord de fermeture inférieur (30") de la zone d'introduction de force inférieure (18") au moins un évidement (14, 15), qui est rempli au moins en partie par le composant à fibres composites (3) .

5. Pied milieu (31) selon l'une quelconque des revendications 1 à 3, **caractérisé en ce que**
la section métallique supérieure (4) et la section métallique inférieure (6) sont formées par des pièces formées de tôle (32, 33) séparées, qui sont à distance l'une de l'autre, sachant que la section métallique supérieure (4) et la section métallique inférieure (6) sont reliées entre elles par le composant à fibres composites (3).

6. Pied milieu (1; 31) selon l'une quelconque des revendications 1 à 5, **caractérisé en ce que**
le composant en fibres composites (3) est constitué en lui-même de façon continue.

7. Pied milieu (1; 31) selon l'une quelconque des revendications 1 à 6, **caractérisé en ce que**
le composant en fibres composites (3) s'étend sur au moins 0,25 fois d'une longueur totale (L₁) du pied milieu, en particulier 50 % et 90 % de la longueur totale (L₁) du pied milieu.

8. Pied milieu (1; 31) selon l'une quelconque des revendications 1 à 7, **caractérisé en ce qu'**
une extrémité inférieure (22) du composant à fibres composites (3) est éloignée d'une extrémité inférieure (23) du pied milieu (1 ; 31) d'une distance d'au moins 10 cm, en particulier d'une distance variant entre 10 cm et 60 cm, et/ou **en ce qu'**une extrémité supérieure (20) du composant à fibres composites (3) est éloignée d'une extrémité supérieure (21) du pied milieu (1 ; 31) d'une distance d'au moins 5 cm, en particulier d'une distance variant entre 5 cm et 40 cm.

9. Pied milieu (1; 31) selon l'une quelconque des revendications 1 à 8, **caractérisé en ce que** la section métallique supérieure (4) et/ou la section métallique inférieure (6) comportent au moins par endroits au moins une bride de jointoiement latérale (13) pour relier des composants limitrophes du pied milieu (31) au pied milieu (31).

10. Pied milieu (1; 31) selon la revendication 9, **caractérisé en ce qu'**
au moins une bride de jointoiement (13) latérale dépasse latéralement le composant à fibres composites (3).

11. Pied milieu (1; 31) selon l'une quelconque des revendications 1 à 10, **caractérisé en ce que**
le pied milieu (1 ; 31) est constitué en forme de U au moins par endroits entre la zone d'introduction de force supérieure (18') et la zone d'introduction de force inférieure (18") de telle sorte qu'un espace creux (10) est formé sur un côté intérieur du véhicule du pied milieu (1; 31) pour recevoir des composants rapportés de véhicule.

12. Pied milieu (1; 31) selon l'une quelconque des revendications 1 à 11, **caractérisé en ce qu'**
au moins un intercalaire de renfort métallique (24) est incorporé dans le composant à fibres composites (3) pour le renfort local du pied milieu (1 ; 31).

13. Pied milieu (1; 31) selon l'une quelconque des revendications 1 à 12, **caractérisé en ce que**
la section métallique supérieure (4) et/ou la section métallique inférieure (6) comportent une épaisseur de paroi variable sur la longueur (L₁) du pied milieu (1 ; 31) .

14. Carrosserie de véhicule avec deux pieds milieux (1 ; 31), sachant que les deux pieds milieux (1; 31) sont structurés selon l'une quelconque des revendications 1 à 13.
